# EUROPEAN PATENT APPLICATION

(11) **EP 1 555 226 A1**
(43) Date of publication of application: **20.07.2005**
(21) Application number: 04075087.9
(22) Date of filing: 14.01.2004
(51) Int. Cl.: B65G 15/54

(54) **Conveyor belt and use of said conveyor belt in a paper mill**

(71) Applicant: Ashworth Jonge Poerink B.V., 7622 BE Borne (NL)
(72) Inventor: Wanders, Hendrikus Benardus Jozef, 7558 WL Hengelo (OV) (NL)
(74) Representative: 't Jong, Bastiaan Jacob

(57) **Abstract**

The invention relates to a conveyor belt comprising a plurality of spirally wound elements extending in transverse direction and connecting rods for connecting two adjacent spirally wound elements,
wherein
the spirally wound elements comprise a wire having a substantially rectangular cross-section.

The invention further relates to the use of a conveyor belt according to the invention in a paper mill.

## Description

The invention relates to a conveyor belt comprising a plurality of spirally wound elements extending in transverse direction and connecting rods for connecting to adjacent spirally wound elements.

Such belts are used for different applications and have the advantage that they provide a conveyor belt with an open structure such that cooling and heating air can flow freely through the conveyor belt. Such belts are conventionally made out of wire having a substantially round cross-section. The minimal thickness of the conveyor belt is dedicated by the necessary strength of the conveyor belt.

Especially in applications in which products lying on the conveyor belt are heated and cooled off it is of advantage when the conveyor belt has a low heat capacity, such that it heats up quickly and cools off quickly.

Another application of the above-mentioned conveyor belt is in paper mills. A paper mill comprises a number of drums along which two conveyor belts on top of each other wind. Between these two conveyor belts paper pulp is pressed into paper. The moisture coming from the paper pulp has to be discharged through the conveyor belt. An above-mentioned conveyor belt has the advantage that it has an open structure, such that moisture can be discharged quickly. However, due to the minimal thickness dedicated by the necessary strength it is not possible to increase the speed of the paper mills, as this causes vibrations due to the relative thickness of the conveyor belt. Nowadays paper mills are mounted with plastic conveyor belts, which can be made with a smaller thickness than the above-mentioned conveyor belt.

The technology used with paper mills is used in an identical way for producing isolation plates, ceiling plates, veneer and so on.

It is an object of the invention to provide a conveyor belt, which can be optionally made out of a metal and of which the minimum thickness can be further reduced.

This object is achieved according to the invention by a conveyor belt which is characterized in that the spirally wound elements comprise a wire having a substantially rectangular cross-section.

Due to this rectangular cross-section it is possible to provide a conveyor belt having similar strength, but which has a smaller thickness than a conventional conveyor belt having wires with round cross-sections.

In an embodiment of the conveyor belt according to the invention adjacent elements interlock and the connection rod extends through the interlocking region.

In a preferred embodiment according to the invention the connection rods have a wave shape with a period corresponding to the period of the spirally wound elements in order to position the rods and elements relative to each other. The spirally wound elements will register into the valleys of the wave shaped connecting rods.

In another preferred embodiment of the conveyor belt according to the invention the ends of each connecting rod are bend back around the ends of an adjacent spirally wound element. This is an easy way of manufacturing, which does not require an additional treatment such as welding the ends. Furthermore it provides for a smooth side of the conveyor belt without any sharp edges.

In yet another preferred embodiment the spirally wound elements have a thickness of less than 3mm.

It is furthermore preferred when the belt is made out of stain and steel. This provides a conveyor belt with a high strength and which is resistant to corrosion.

In just another preferred embodiment the conveyor belt comprises a plurality of filling elements arranged inside in the spirally wound elements in order to reduce the permeability of the belt.

In some applications, such as in a paper mill, the permeability of the belt has to be reduced in order to reduce air flow and for example to reduce the evaporation speed of water present in the product transported by the conveyor belt. Especially in the case of a paper mill the water in the paper may not evaporate too quick in order to prevent the affecting of the paper quality.

Also in some cases it is desired to have a low drag of the belt. When a belt has an open structure the air in the open structure is moved along with the belt resulting in displacement of a large volume of air. Especially in the case wherein the belt moves through areas with different temperatures such drag is unwanted.

Preferably the filling elements consist of a plastic. As the filling elements only have to fill the space in the spirally wound elements a light weight plastic can be used to fill up the space.

The invention further relates to the use of a conveyor belt according to the invention in a paper mill. In a preferred embodiment of said use the paper mill comprises a number of drums along which at least two conveyor belts wind, in between the paper is formed, wherein at least one conveyor belt is a conveyor belt according to the invention.

The invention is further elucidated in conjunction with the accompanying drawings.

Figure 1 shows part of a conveyor belt according to a first embodiment of the invention.

Figure 2 shows part of a conveyor belt according to a second embodiment of the invention.

The conveyor belt 1 has spirally wound elements 2 which are connected to each other by connecting rods 3. In the shown embodiment the spirally wound elements 2 are alternatingly wound clockwise and counter clockwise.

The spirally wounds elements 2 interlock at an interlocking region 4 and in this interlocking region a connecting rod extends through the two adjacent spirally wound elements 2.

As is clear from the figure the ends of the connecting rods 3 are bend back around an adjacent spirally wound element.

What is further clear from the drawing, is that the spirally wound elements 2 are made from a flat wire having a substantially rectangular cross-section.

This flat wire can be manufactured out of wire having a substantially round cross-section and can be flattened before the flat wire is processed to a spirally wound element.

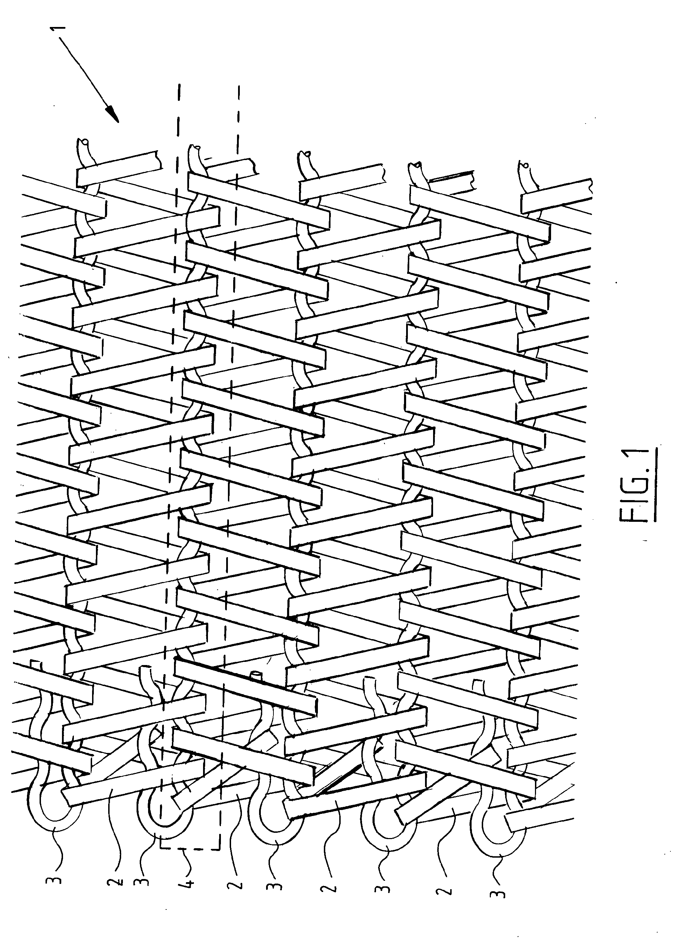

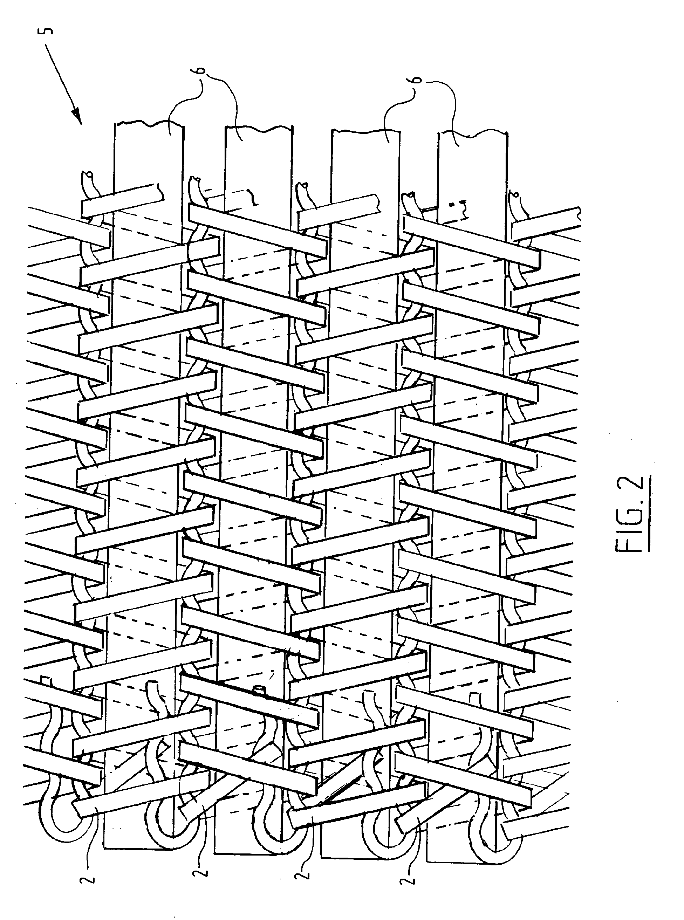

Figure 2 shows part of a conveyor belt according to a second embodiment of the invention. The structure of the conveyor belt 5 is identical to the conveyor belt 1 according to figure 1. The only exception is that the space inside the spirally wound elements 2 are filled with a filling element 6. This filling element 6 is made of a plastic, preferably a plastic with a so called memory function. This plastic is made in large length and then reduced in dimensions, such that it can be inserted easily into the spirally wound elements 2. After heating the plastic it remembers its originals dimensions, such that it gets stuck inside the spirally wound elements.

## Claims

1. Conveyor belt comprising a plurality of spirally wound elements extending in transverse direction and connecting rods for connecting two adjacent spirally wound elements,
**characterized in that**
the spirally wound elements comprise a wire having a substantially rectangular cross-section.

2. Conveyor belt according to claim 1, wherein adjacent elements interlock and the connecting rod extends through the interlocking region.

3. Conveyor belt according to claim 1 or 2, wherein the connecting rods have a wave shape with a period corresponding to the period of the spirally wound elements in order to position the rods and elements relative to each other.

4. Conveyor belt according to claim 3, wherein the ends of each connecting rod are bent back around the ends of an adjacent spirally wound element.

5. Conveyor belt according to any of the preceding claims, wherein the spirally wound elements have a thickness of less than 3 millimeters.

6. Conveyor belt according to any of the preceding claims, wherein the belt is made out of stainless steel.

7. Conveyor belt according to any of the preceding claims, comprising a plurality of filling elements arranged inside the spirally wound elements in order to reduce the permeability of the belt.

8. Conveyor belt according to claim 7, wherein the filling elements consist of a plastic.

9. Use of a conveyor belt according to any of the preceding claims in a paper mill.

10. Use according to claim 8, wherein the paper mill comprises a number of drums along which at least two conveyor belts wind, in between the paper is formed, wherein at least one conveyor belt is a conveyor belt according to any of the claims 1 - 6.
